# EUROPEAN PATENT APPLICATION

(11) **EP 1 003 097 A2**
(43) Date of publication of application: **24.05.2000**
(21) Application number: 99308349.2
(22) Date of filing: 22.10.1999
(51) Int. Cl.: G06F 9/44

(54) **Method and apparatus for storing data as liquid information**

(30) Priority: 30.10.1998 US 182637
(71) Applicant: LUCENT TECHNOLOGIES INC., Murray Hill, New Jersey 07974-0636 (US)
(72) Inventor: Gillis, Philip William, Whippany, New Jersey 07981 (US)
(74) Representative: Watts, Christopher Malcolm Kelway, Dr.

(57) **Abstract**

A design information system receives and stores design information in a database in an easily accessible platform independent form. The design information system is capable of receiving information in any of a number of different formats and translating the information into an appropriate format for storage. The design information can then be extracted from the database by a program or application for construction of a desired object. The design information is stored to provide ease of translation across platforms and for continued usefulness with newly developed platforms and environments.

## Description

### Field of the Invention

The present invention relates to improvements for storage of design information. More specifically, the invention relates to advantageous aspects for storing information in a readily portable, easily manipulated form suitable for easy or automatic conversion into desired formats and objects.

### Description of the Related Art

Many software programs are based, in whole or in part, on an underlying type of well-known design data such as message sets, Finite State Machines (FSMs), and rule based sets. This underlying design data is particularly common in telecommunication software. Often this design data is not formally specified, but is hard-coded manually in a programming language that is compiled into machine code to be executed by a given processor and operating system. Design data or information is also specified in system requirements, documents or published standards, and is then translated by hand into source code for a specific application. Current practice requires that the reuse of information in a different application environment be accompanied by the difficult and expensive process of writing a new source code adapted to the new environment.

Design data or information can be defined as data that specifies the objects of a computer system environment, its properties and interconnections. Examples of objects include a block of code, a worldwide web (WWW) page, a design specification including data used only within the object, input/output interfaces, graphic user interfaces (GUIs) and manual pages. The type and variety of objects which may be produced is very wide-ranging. Software objects used in a standard interface are applicable to a variety of applications because the object has no dependencies on a specific environment. A computer using the standard interface can therefore use design information for developing various objects or computer applications if access to the information does not depend on a specific object or environment.

Design information can retain its usefulness for years extending across current and future environments. Design information can be reused in many ways throughout its life cycle and may cross numerous product releases and product lines. Therefore, its lifetime may be longer than any single product as it is adapted to changing technologies and requirements. Retention and reuse of design information can facilitate faster delivery of high quality software, provide real-time synchronization between the production of requirements, documentation and software, and allow rapid response to an ever changing environment.

However, the present methods and techniques of reusing data compromise these advantages. The present day storage of design data, primarily in human readable form and the requirement for expensive human intervention to translate the information into software and other products slows software development, impairs synchronization between the production of requirements, documentation and software, and slows the response to changes in the environment.

Significant advantages can be achieved in the retrieval and reuse of design data if the information can be stored in a form suited for automatic manipulation. Present day applications store design data in commercial databases for convenient retrieval, but present storage techniques do not allow manipulation of the information for use over a variety of application environments. For example, linguistic techniques describe design information as custom languages and then use the custom language to adapt the design data. However, the construction of custom languages and modification thereof are complex and costly, lacking the simplicity of a technique which could use commercially available databases to store design data.

A need therefore exists in the art for a system of storing design information in a readily available database and making the design information available for multiple uses independent of the type of application, wherein the design information is readily available and manipulatable into a desired form.

### Summary Of The Invention

The present invention provides a design information system for preparing and storing design information in a form suitable for convenient automatic transformation into software products. The information system includes an application independent database for storing design information in a user-defined form, which allows for subsequent multiple uses, such as programming code, documentation and graphical drawings. The information system includes a processor accessing a database having a database format structured for a type of design information, accessing a set of rules configured for the database and an object type, receiving an object of the object type, wherein the object has design information, and storing the design information in the database based on the set of rules in the memory device.

Thereafter the design information can be used in many ways throughout its life cycle, which may cross product releases, components systems and product lines. Its lifetime may be longer than any single product or component as it is adapted to changing technologies and requirements. The design information database therefore provides the benefits of faster delivery of higher quality software, real-time synchronization between the production of requirements, documentation and software, and rapid response to changing environments.

### Brief Description Of The Drawings

The invention will be described in detail with reference to the following drawings, wherein like numerals represent like element and:
Fig. 1 illustrates a design information storage system according to a preferred embodiment of the invention;
Fig. 2 is a flowchart illustrating the steps of a method of design information storage according to the present invention;
Fig. 3 illustrates a graphic design diagram using Finite State Machine (FSM) design information;
Fig. 4 illustrates user defined fields for an example database;
Fig. 5 illustrates format-independent design information stored in the example database of Fig. 4; and
Fig. 6 is an example excerpt from a requirements document with FSM design information.

### Detailed Description Of The Invention

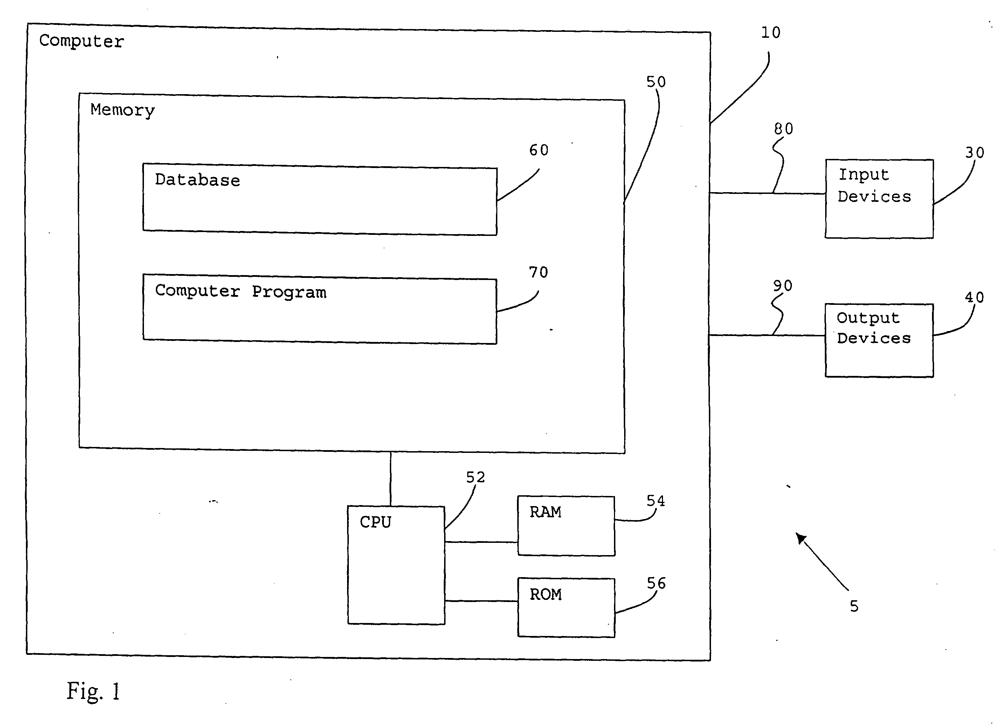

Fig. 1 illustrates a design information storage system 5 according to the preferred embodiment of the present invention. The system 5 includes a computer 10, connected to input devices 30 and output devices 40. The computer 10 includes a central processing unit (CPU) 52 connected to a random access memory (RAM) 54, a read-only memory (ROM) 56 and a mass storage device 50. The input devices 30 allow human interaction with and data input to the computer 10. Accordingly, the input devices 30 include input components such as a keyboard, a mouse, a screen, a scanner, a disk drive, and other devices known for inputting data to the computer 10. The output devices 40 receive output data from the computer 10. The output devices 40 include but are not restricted to a printer and a screen. As an alternative, both the input devices 30 and the output devices 40 may be a modem, a network connection or off-line storage unit which communicates with the computer 10 via propagated signals 80 and 90.

A design information database 60 is stored in the mass storage device 50 which may be a hard disk, floppy disk, optical disk, etc. The memory 50 also stores computer program 70 which instructs the computer 10 to perform the design information storage method according to the present invention when executed. In other words, whether loaded from the memory 50 or from the input devices 30 into the computer 10, the computer program 70 transforms the computer 10 into a special purpose machine that implements the invention. More particularly, each step of the inventive method transforms at least the portion of the computer 10 into a special purpose computer module implementing that step.

Other embodiments of the invention include firmware embodiments and hardware embodiments wherein the inventive method is programmed into firmware (such as EPROM, PROM or PLA) or wholly constructed with hardware components. Constructing such firmware and hardware embodiments of the invention would be a routine matter to one of ordinary skill using known techniques.

Still further, the invention disclosed herein may take the form of an article of manufacture, such as a computer-usable medium, including a computer-readable program code embodied therein; wherein the computer-readable code causes the computer 10 to execute the inventive method.

The database 60 is relational or object oriented as understood by one skilled in the art, and is user defined to store the desired design information. That is, the structure of the database 60 can be designed and edited in accordance with the type of input design information or in accordance with an anticipated use of the information. The database 60 is preferably constructed using a commercially available database manager such as Microsoft Access®.

The present invention formats different types of design data such as message sets, Finite State Machines (FSMs), and rule based sets decoded from an input structure, such as a graphical design diagram, programming code, database entry form or requirement document, into a user-defined structure that is accessible for encoding into at least one different output structure, such as a graphical design diagram, programming code, database entry form or requirement document. A graphical design diagram is a drawing that represents design information. Example graphical design diagrams include flowcharts, procedural roadmaps, block diagrams, business diagrams, network diagrams, facilities management diagrams, and industrial process diagrams. A requirements document describes the design and operational characteristics, protocols, functionality and requirements of a system or product.

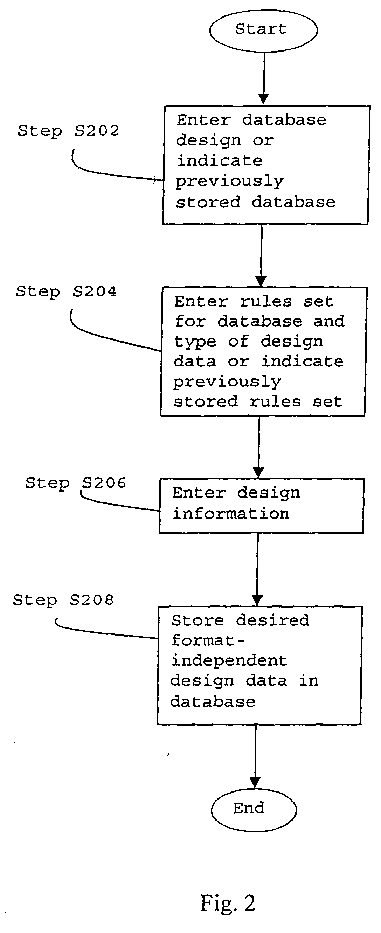

Fig. 2 illustrates the operation of storing design information in a database according to the present invention. At step S202, a database 60 is entered into the memory 50. Using the database manager, a user enters a database design for the database 60 or identifies a previously stored database design, and enters an empty database 60 based on the database design to store information for a specific type of design data. The database design is a structural outline of the database 60. Consequently, if the design information is in the form of a FSM, then the database will have a structure specific to a FSM and include fields including the current state, the next state, the event that triggers movement to the next state, and an action that takes place upon occurrence of the event.

At step S204, a user enters a rules set specifically configured for the database and the type of design data or indicates a previously stored rules set. The rules set defines how the information in the input structure is identified by the computer 10 so that the CPU 52 knows where in the database to enter information. The rules set will depend on the specific input structure and the type of design data. For example, a FSM flowchart will have a different rules set than a requirements document or even a FSM block diagram because they have different input structures. That is, a flowchart for a FSM includes geometric shapes for every state, event and action that defines the operation listed in the geometric shape. A requirements document and block diagram generally do not use shapes for every state, event and action.

At step S206, format-specific and format-independent design information is entered. The design information may be received in any of numerous different structures as described above, and may include both elements of design information and information regarding relationships between the structure of the design information. When the design information is a graphical design diagram, then the input device is preferably a commercially available reader such as a disk drive and generally includes at least a keyboard or scanner. When the design information is a message set, then the input device is a commercially available text or form reader. A message set is a well-known type of design information structure such as a group of commands, whereby each command has its associated attributes, parameters and values. In addition, when the design information is a rule based set, then the input device is a commercially available graphical design reader or a text reader.

Both format-specific and format-independent design information is read by the computer 10. However, format-specific information is filtered from evaluation and not stored in the database 60. The format-specific information includes data that is important to the arrangement of the input structure but is irrelevant to the function and objective of the design. If the design information is received as a computer program, for example, information relating to comments, keywords, formatting, and other language-specific characteristics is discarded so that the basic design information of the computer program can be retained in the format-independent form specified by the database 60. If the design information is received as a requirements document, then most of the text is format-independent design information. Format-specific information such as page numbers, paragraph numbers, fonts, tab settings, and page breaks, is ignored. If the design information is received as a graphics design diagram, then information such as the identification, location, and shape of the boxes, direction and length of the connecting lines and page numbers is ignored.

At step S208, the desired format-independent design information is stored in the user defined database as described below and can be queried, used and reused by different programs and applications.

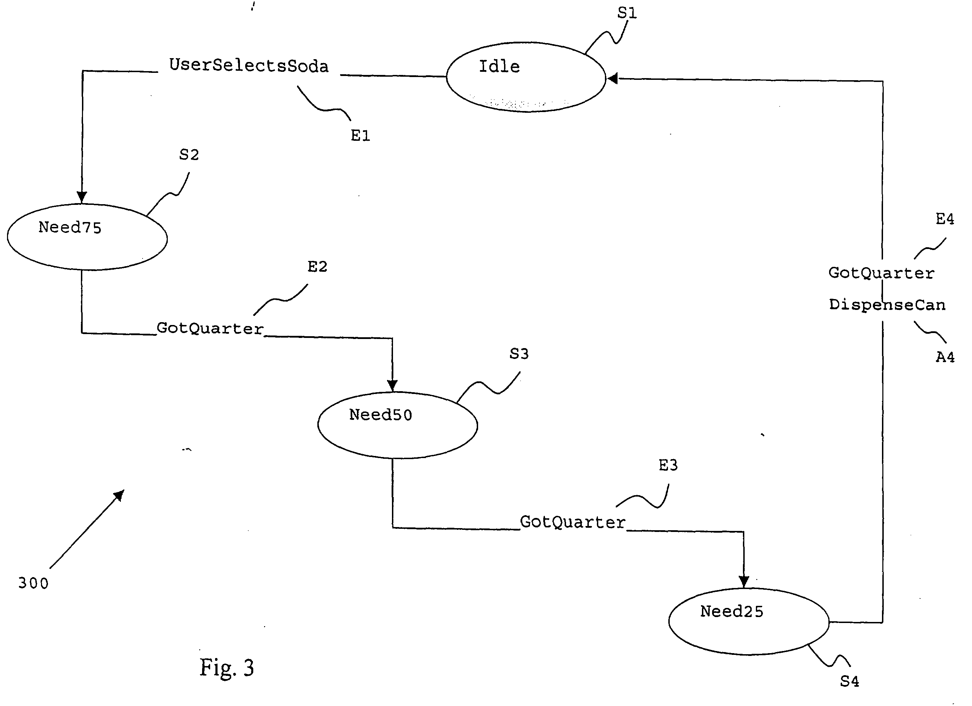

The operation of the present invention will now be described in detailed with reference to specific examples of preferred embodiments. Fig. 3 illustrates a graphic design diagram 300 using the well-known Finite State Machine (FSM) symbology, which is expressed as a series of states and actions. The diagram 300 shows states of a soda machine and is initially in an idle state S1. When a user selects a soda, the soda machine shifts to the "Need75" state S2, and the soda machine waits for money. Upon receipt of a quarter, the soda machine shifts to the "Need50" state S3 and waits for more money. Upon receipt of a second quarter, the soda machine shifts to the "Need25" state S4. The soda machine then receives a third quarter and dispenses a can of soda. Accordingly, in FSM symbology, states are shown in ellipses and actions are shown by labeled vectors between the states.

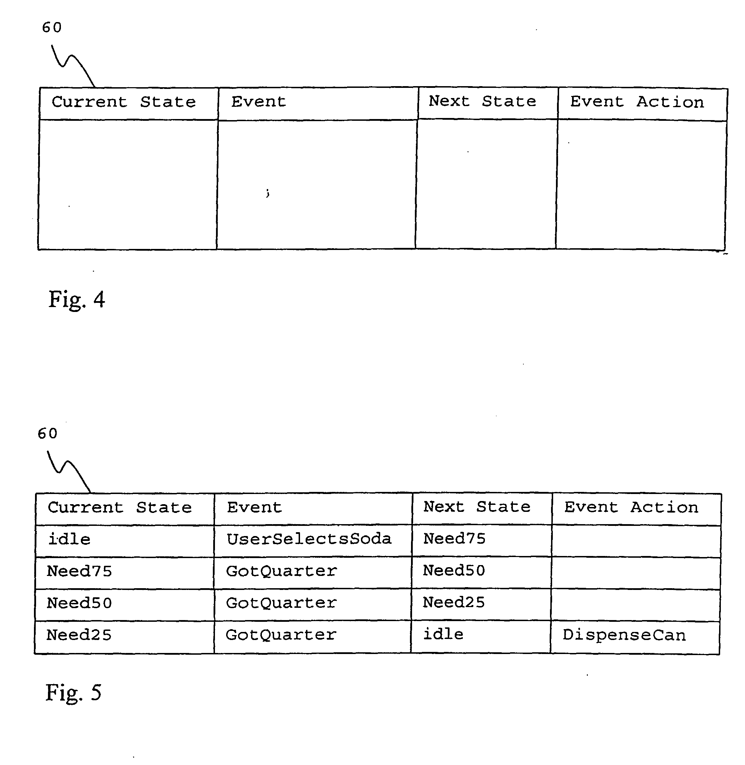

As shown at step S202, a user selects a prestored database 60 or designs and enters the database 60. Fig. 4 illustrates the database 60 which a user might create to store design data expressed in FSM symbology. The selected fields of the database 60 are current state, event, next state, and event action. "Current state" identifies the placement of standing within a process at a given instance. The "next state" field identifies the following placement of standing. The "event" field identifies the condition required to shift from the "current state" to the "next state". The occurrence of an event from a specific state may also trigger an action identified in the "event action" field.

Next, as shown at step S204, a user selects a prestored rules set or a rules set to instruct the computer 10 how to identify shapes and text from a FSM process diagram and enter data into the corresponding fields of the database 60. For example, the user might create the following rules set for design data expressed in FSM symbology:
(Rule 1) recognize data in ellipse as a state;
(Rule 2) recognize vectors as state transitions;
(Rule 3) recognize vector identifier as event;
(Rule 4) recognize text following vector identifier as event action;
(Rule 5) recognize base of vector as current state;
(Rule 6) recognize point of arrow as next state;
(Rule 7) recognize shaded ellipse as initial current state; and
(Rule 8) recognize point of arrow into shaded ellipse as next state and exit routine.

As shown at step S206, the design data is entered. It is understood that the design data is not necessarily entered in the form of shapes and vectors as shown in Fig. 3, but could be entered in the form of computer machine language instructing how to display the design data in the form shown in Fig. 3, for example, as a state transition table. One having ordinary skill in the art would understand how to substitute the computer machine language equivalents for the shapes and vectors in the rules set to implement the invention. However, the rules are listed using shapes and vectors instead of machine language for ease of understanding.

Based on rules 1 and 7, the computer 10 knows to enter the data "idle" in the shaded ellipse into the first "current state" entry of the database 60 as shown in Fig. 5. Based on rules 2, 3 and 5, the computer 10 knows to process the base of vector from the "idle" state S1 and read the vector identifier "UserSelectsSoda" event E1 and enter the event E1 in the first "event" entry of the database 60. Based on rules 6 and 1, the computer 10 recognizes the ellipse at which the vector terminates as the "next state" and enters "Need75" into the first "next state" entry of the database 60.

Based on rules 5 and 1, the computer 10 also recognizes the data "Need75" in the ellipse as the following "current state" and enters the data in the following "current state" entry. Based on rules 2, 3 and 5, the computer 10 knows to process the base of the vector from the "Need75" state S2 as the state transition, recognizes vector identifier "gotquarter" as an event E2 and inputs the event E2 in the "event" entry in the database 60 for the record having "Need75" as its current state.

Processing continues in this manner, eventually the "Need25" state is reached. After the computer 10 enters "Need25" into the "current state" entry of database 60 based on rules 1 and 5, the computer 10, based on rules 2, 3 and 5, recognizes vector identifier "gotquarter" as an event E4 and enters the event E4 into the respective "event" entry of database 60. Based on rule 4, the computer 10 knows to enter the text following the event E4 as an event action A4 and enters "DispenseCan" into the "event action" entry of database 60 for the record having "Need25" as its current state. Based on rules 1 and 8, the computer knows that the state identifier "idle" is the next state, enters "idle" into the "next state" entry of the database 60 as shown in Fig. 5 and exits the database entry routine. Upon completion of the routine, the design information that is critical to the functional design of the diagram is stored in the database 60 as shown at step S208 and illustrated in Fig. 5.

The database design and rules set only need to be designed once for this type of design information and structure. That is, once the database design of Fig. 4 and rules set for a FSM graphic design diagram have been stored, the computer 10 can enter design data from another FSM graphic design diagram using the existing database design and rules set. This provides the benefit of storing new format-independent design data into database 60 by providing only the new design diagram, and therefore allows a user to store the information without having to reenter the database format or rules set.

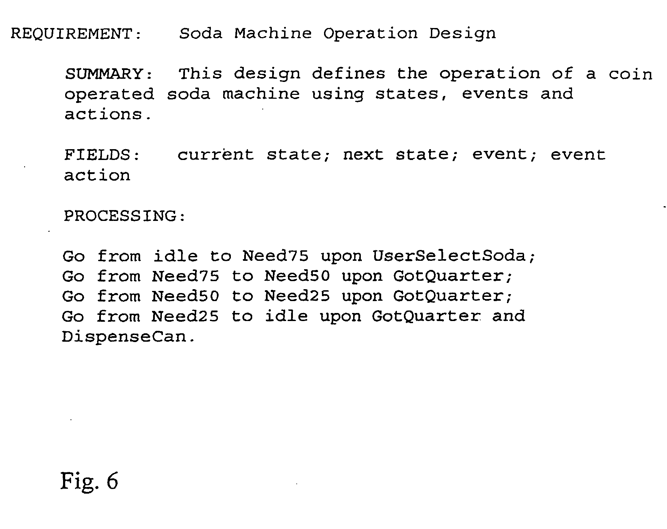

Fig. 6 is an example excerpt from a requirements document that identifies the differences between format-specific and format-independent design information. Upon receipt of the excerpt, the computer program 70 looks for identifiers such as keywords that identify the format-independent design information desired for storage in the database 60. For example, the excerpt shown in Fig. 6 describes the graphics design diagram displayed in Fig. 3 and uses the database structure and fields illustrated in Fig. 4. In Fig. 6, the information after keyword "PROCESSING" includes the design information to be stored in the database 60 as the user defined fields illustrated in Fig. 4, based on Rule 6 described below. The information is written as a type of pseudo-code and can easily be coded in a program language such as Pascal, Fortran, C/C++, Lisp, Basic, etc. by a programmer having ordinary skill in the art. The program languages are therefore another form of expression that can be used by the invention to store design information into the database 60.

If database 60 shown in Fig. 4 has been stored as described above, then the user does not have to enter a new database. Instead, the user indicates in step S202 that the computer 10 should use the previously stored database design of Fig. 4.

Next, as shown at step S204, the user enters a rules set to instruct the computer 10 how to identify text from a FSM requirements document and enter data into the corresponding field of the database 60. For example, an applicable set includes the commands:
(Rule 1) recognize data between "from" and "to" as current state;
(Rule 2) recognize data between "to" and "upon" as next state;
(Rule 3) recognize data after "upon" and up to "and" or ";" as event;
(Rule 4) recognize data after "and" as event action;
(Rule 5) recognize "." as exit routine;
(Rule 6) ignore text prior to keyword "PROCESSING:"; and
(Rule 7) process text following keyword "PROCESSING:".

As shown at step S206, the design data is entered in a well-known manner such as word processing document file. Based on Rules 6 and 7, the computer 10 ignores all the format specific information prior to the keyword "PROCESSING:" in the requirements document, and begins processing the text following this keyword. Based on rule 1, the computer 10 recognizes data between "from" and "to" and knows to enter the data "idle" in the first "current state" entry of the database 60. Based on rule 2, the computer 10 recognizes data between "to" and "upon" and knows to enter the data "Need75" in the first "next state" entry of the database 60. Based on rule 3, the computer 10 recognizes data after "upon" up to ";" and knows to enter the data "UserSelectSoda" in the first "event" entry of the database 60.

Continuing processing in this manner, eventually the last line under the keyword "PROCESSING;" is reached. Based on rule 1, the computer 10 recognizes data between "from" and "to" and knows to enter the data "Need25" in the next "current state" entry of the database 60. Based on rule 2, the computer 10 recognizes data between "to" and "upon" and knows to enter the data "idle" in the respective "next state" entry of the database 60. Based on rule 3, the computer 10 recognizes data after "upon" up to "and" and knows to enter the data "GotQuarter" in the respective "event entry" of the database 60. Based on rule 4, the computer recognizes data after "and" and knows to enter the data "DispenseCan" in the respective "event action" entry of the database 60. Based on rule 5, the computer 10 recognizes "." and exits the database entry routine. Upon completion of the routine, the design information that is critical to the functional design of the diagram is stored in the database 60 as shown at step S208 and illustrated in Fig. 6 while the format-specific information of "go", "from," "to," etc. is ignored.

The design information stored in database 60 from the requirements document illustrated in Fig. 6 is identical to the design information stored in database 60 from the design entry diagram illustrated in Fig. 3. That is, the invention applies a requirements document and a design entry diagram to provide the same stored database 60. Accordingly, the same design information is stored in a general fashion independent of the particular mode of expression. The design data can thus be a reusable asset easily adapted to future developed modes of expression, because it is free of extraneous elements. The database 60 can be queried and used by applications such as interactive PC programs including system GUIs, simulators and WWW applications, and can be used to develop programming code and documentation. For instance, the stored design data can be converted into other usable formats using the related Application No. Unknown, entitled METHOD AND APPARATUS FOR AMPLIFYING DESIGN INFORMATION INTO SOFTWARE PRODUCTS, filed on the same date by the same inventor as the subject application, and hereby incorporated by reference in its entirety.

While the method of storing design data has been described with respect to design data expressed in FSM symbology and as expressed in a requirements document, the method of the present invention is not limited to these forms of expression or the database design explained in association therewith. Instead, one skilled in the art will readily appreciate from the foregoing disclosure how to develop database designs and rules sets to store design data expressed in any form including, but not limited to, FSMs, message sets, rule based sets, program code, documentation, form entry data, and graphical design diagrams.

It will also be understood that database 60 could have any type of format independent structure, including relational or object oriented structures. It will also be readily appreciated that the database 60 could be modified directly using a commercially available database program or a form entry system designed for the specific database.

It should be apparent from the aforementioned description and attached drawings that the concept of the present application may be readily applied to a variety of preferred embodiments including those disclosed herein. Accordingly, the scope of the invention described in the instant application should be limited solely by the appended claims.

## Claims

1. A method for storing format-independent design information, comprising the steps of
(a) providing a database having a database format structured for a type of design information; ;
(b) providing a set of rules configured for the database and an object type;
(c) entering an object of the object type, wherein the object has design information; and
(d) storing the design information in the database based on the set of rules.

2. The method of claim 1, wherein
the step (c) enters the object having the design information which includes format specific information and format independent information, and
the step (d) stores the format independent information in the database based on the set of rules.

3. The method of claim 2, wherein the step (d) does not store the format specific information.

4. The method of any of the preceding claims, wherein the type of design information includes one of message sets, Finite State Machines, and rules based sets.

5. The method of any of the preceding claims, wherein the object is one of a graphical design diagram, documentation, pseudo code, and program code.

6. The method of any of the preceding claims, wherein the step (a) accesses a previously stored database.

7. The method of any of claims 1 to 5, wherein the step (a) includes the step of receiving user input specifying a structure of the database

8. The method of any of the preceding claims, wherein the step (b) accesses a previously stored set of rules.

9. The method of any of claims 1 to 7, wherein the step (b) includes the step of receiving user input specifying the set of rules.

10. A design information system comprising means arranged to carry out each step of a method as claimed in any of the preceding claims.

11. A computer program embodied on a computer-readable medium for storing design information comprising code segments for causing a computer to carry out each step of a method as claimed in any of claims 1 to 9.

12. A computer data signal comprising signal segments for carrying out each step of a method as claimed in any of claims 1 to 9.
